Europäisches Patentamt

European Patent Office

Office européen des brevets

(11) Numéro de publication: **0 294 874**
**A1**

## (12) DEMANDE DE BREVET EUROPEEN

(21) Numéro de dépôt: 88201097.8

(51) Int. Cl.⁴: **H04N 5/44**

(22) Date de dépôt: 01.06.88

(30) Priorité: 04.06.87 FR 8707794

(43) Date de publication de la demande:
**14.12.88 Bulletin 88/50**

(84) Etats contractants désignés:
**DE ES FR GB IT SE**

(71) Demandeur: **Laboratoires d'Electronique et de Physique Appliquée L.E.P.**
**3, Avenue Descartes**
**F-94450 Limeil-Brévannes(FR)**

(84) **FR**

(71) Demandeur: **N.V. Philips' Gloeilampenfabrieken**
**Groenewoudseweg 1**
**NL-5621 BA Eindhoven(NL)**

(84) **DE ES GB IT SE**

(72) Inventeur: **Chantelou, Olivier Société Civile S.P.I.D.**
**209, rue de l'Université**
**F-75007 Paris(FR)**

(74) Mandataire: **Landousy, Christian et al**
**Société Civile S.P.I.D. 209, Rue de l'Université**
**F-75007 Paris(FR)**

(54) **Procédé de traitement de signaux vidéo échantillonnés selon un réseau d'échantillonnage différent d'une image à l'autre et convertisseur de signaux vidéo pour la mise en oeuvre de ce procédé.**

(57) Convertisseur de signaux vidéo pour la mise en oeuvre d'un procédé de traitement de signaux vidéo échantillonnés selon un réseau d'échantillonnage différent d'une image à l'autre. Ce convertisseur comprend :

(a) un circuit de filtrage spatial, qui est un circuit (30) d'interpolation ;

(b) un circuit de sélection, qui comprend une première mémoire (10) retardant le signal d'entrée de la durée d'une image, une deuxième mémoire (20) retardant la sortie de la première mémoire de la durée d'une image, deux premier et deuxième circuits à retard (40 et 50), et un circuit de tri (60) recevant sur ses trois entrées respectivement le signal de sortie du deuxième circuit à retard, le signal de sortie du circuit d'interpolation, et le signal de sortie du premier circuit à retard ;

(c) un circuit de reconstitution d'image finale, qui comprend un troisième circuit à retard (70) et un circuit de multiplexage (80).

# Procédé de traitement de signaux vidéo échantillonnés selon un réseau d'échantillonnage différent d'une image à l'autre et convertisseur de signaux vidéo pour la mise en oeuvre de ce procédé

La présente invention concerne un procédé de traitement de signaux vidéo échantillonnés selon un réseau d'échantillonnage différent d'une image à l'autre comprenant, entre autres opérations, une opération de sélection de signaux vidéo aiguillés.

L'invention concerne également un convertisseur de signaux vidéo pour la mise en oeuvre de ce procédé.

La radiodiffusion directe d'images à haute définition exige une bande passante qui n'est pas compatible avec les possibilités actuelles des canaux de transmission. Il est donc nécessaire, pour radiodiffuser de telles images, de réduire cette bande passante par sous-échantillonnage.

Pour obtenir quand même, à la réception, une qualité d'image proche de celle de départ dans le cas d'images fixes, les structures d'échantillonnage actuellement proposées (voir par exemple le rapport de laboratoire "A single channel HDTV broadcast system : the MUSE" de Y. Ninomiya et al., n°304, septembre 1984, diffusé par la société NHK, Tokyo, 157 Japon) prévoient d'utiliser un premier réseau d'échantillonnage pour les images paires et un autre, entrelacé avec le premier, pour les images impaires. La résolution complète est alors retrouvée à la réception par accumulation des échantillons de deux images successives. Dans le cas d'images en mouvement, il est prévu en outre une interpolation dans l'image courante.

La revue "Radio Mentor Elektronik", n°5, 1975, page 196, décrit un procédé et un dispositif de traitement de signaux vidéo dans lesquels il est prévu notamment une opération de sélection de signaux vidéo. Cette opération de sélection, associé à une opération ultérieure de décision, est réalisée dans un filtre non-linéaire dont la mise en oeuvre permet d'obtenir une image de qualité correcte. On sait, cependant, que de telles méthodes de traitement, à détection de mouvement, engendrent quand même des défauts tels que le phénomène de papillotement aux points de commutation.

Le but de l'invention est de proposer un procédé de traitement amélioré prévoyant toujours une opération du type sélection mais évitant de recourir à une opération de décision.

A cet effet, l'invention concerne un procédé de traitement caractérisé en ce qu'il comprend les opérations suivantes :

(a) filtrage spatial par calcul, en chaque point à générer d'une image courante, d'une valeur résultant de la pondération des valeurs attachées aux points voisins dudit point dans la même ligne de cette image courante et aux points également voisins dudit point mais appartenant à au moins deux lignes voisines de ladite ligne courante de l'image courante ;

(b) ladite sélection, par tri et choix de la valeur intermédiaire parmi celles ainsi triées, le tri opéré étant effectué parmi plusieurs valeurs dont l'une est celle obtenue à la suite de l'opération de filtrage spatial et dont les autres sont celles attachées à des points de même position que ledit point de la ligne courante mais appartenant au moins à l'image qui précède et à l'image qui suit ladite image courante ;

(c) reconstitution d'image par génération d'un signal vidéo échantillonné selon un réseau d'échantillonnage identique pour toutes les images, les points courants de ladite image comprenant alternativement le point correspondant de l'image initiale quand ce point correspondant existe et un point reconstruit selon les opérations précédentes de filtrage et de sélection quand ce point correspondant n'est pas présent.

Le procédé ainsi proposé est avantageux en ce sens que son principe même, qui consiste à opérer par tri de valeurs et non par décision, évite effectivement les phénomènes de papillotement rencontrés aux points de commutation dans les réalisations faisant appel aux procédés antérieurs. Par ailleurs, dans le cas d'images fixes, l'utilisation de ce procédé n'entraîne aucune perte de résolution spatiale, tandis que, dans le cas d'images mobiles, l'absence de pondération dans la direction temporelle évite pratiquement tout effet de traînage.

La mise en oeuvre de ce procédé est particulièrement intéressante dans le domaine de la télévision. Un convertisseur de signaux vidéo pour la mise en oeuvre du procédé selon l'invention peut comprendre, dans le cas d'une telle application, un circuit de filtrage spatial, un circuit de sélection de signaux vidéo, et un circuit de reconstitution d'image finale. Plus précisément, dans un mode de réalisation préférentiel de l'invention, ledit convertisseur est remarquable en ce que :

(a) le circuit de filtrage spatial comprend un circuit d'interpolation par pondération des signaux associés au point courant d'une ligne de l'image courante, aux points voisins dudit point dans la même ligne de cette image courante et aux points également voisins dudit point mais appartenant à au moins deux lignes voisines de ladite ligne courante de l'image courante ;

(b) le circuit de sélection comprend une première mémoire retardant le signal d'entrée de la durée d'une image, une deuxième mémoire retardant la sortie de la première mémoire de la durée d'une image, deux premier et deuxième circuits à retard dont l'entrée est reliée pour le premier de ces circuits à l'entrée de la première mémoire et pour le deuxième à la sortie de la deuxième mémoire, et un circuit de tri recevant sur ses trois entrées respectivement le signal de sortie du deuxième circuit à retard, le signal de sortie du circuit d'interpolation, et le signal de sortie du premier circuit à retard;

(c) le circuit de reconstitution d'image finale comprend un troisième circuit à retard et un circuit de multiplexage.

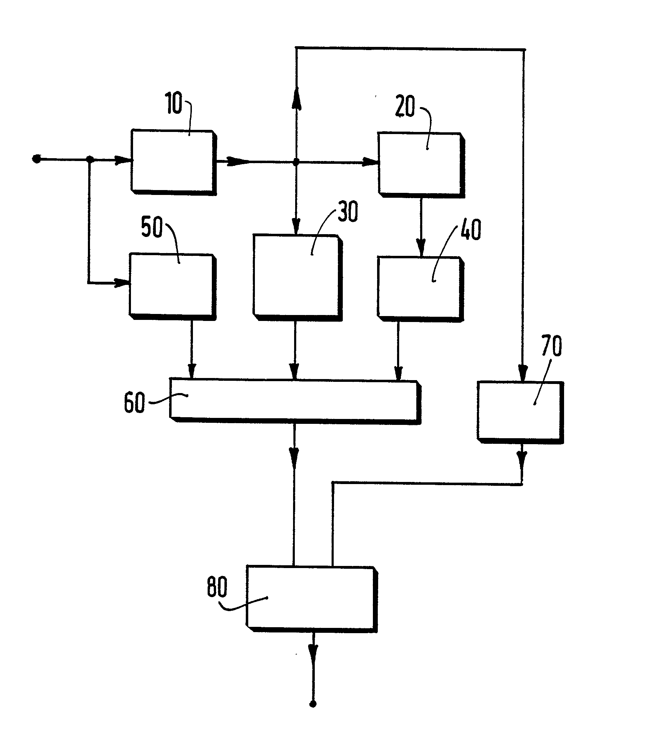

Les particularités et avantages de l'invention apparaîtront maintenant de façon plus détaillée dans la description qui suit et sur la figure 1 donnée à titre d'exemple non limitatif et qui montre un mode de réalisation préférentiel d'un convertisseur de signaux vidéo conforme à l'invention.

Le procédé conforme à l'invention comprend une opération de filtrage spatial, une opération de sélection, et une opération de génération de signaux de sortie par multiplexage des points de l'image de départ et des points reconstruits.

L'opération de filtrage spatial consiste, à partir de signaux d'entrée constitués par les échantillons numériques successifs de signaux vidéo échantillonnés, à calculer en chaque point à générer d'une ligne courante une valeur résultant de la pondération de celles attachées aux points voisins mais appartenant à la ligne courante ou à des lignes voisines de cette ligne courante dans la même trame. Le nombre de lignes voisines qui peuvent ainsi intervenir est couramment égal à deux, mais peut être différent sans que l'on soit pour autant hors du cadre de l'invention.

L'opération de sélection consiste ici à opérer un tri parmi trois valeurs dont l'une est celle du signal d'interpolation délivré à la suite de l'opération de filtrage spatial décrite ci-dessus et dont les deux autres sont celles attachées à des points de même position que celui de la ligne courante pour lequel on vient de déterminer le signal d'interpolation mais appartenant respectivement à l'image qui précède et à l'image qui suit l'image contenant cette ligne courante. La nature du tri effectué est, plus précisément, le choix de celle des trois valeurs qui occupe le rang intermédiaire. Cette sélection par tri et choix de valeur intermédiaire peut bien entendu être opérée sur un nombre différent de valeurs, impair ou même pair.

L'opération de génération de signal vidéo non entrelacé consiste enfin en une reconstitution d'image finale non entrelacée dans laquelle le point courant correspond soit à un point de l'image d'origine, soit à un point reconstitué comme indiqué précédemment, c'est-à-dire par interpolation intra-image et tri inter-images successivement opérés.

Un exemple de réalisation d'un convertisseur de signaux vidéo pour la mise en oeuvre du procédé qui vient d'être décrit est maintenant proposé sur la figure 1. Ce convertisseur comprend tout d'abord un circuit de filtrage spatial. Une première mémoire 10 retarde le signal d'entrée de la durée d'une image, et une deuxième mémoire 20 retarde à nouveau la sortie de la première mémoire 10 de la durée d'une image. Le signal d'entrée étant un signal vidéo échantillonné qui correspond à une succession d'images échantillonnées selon deux réseaux différents, les deux signaux à l'entrée et en sortie de la mémoire 10 correspondent à deux points qui ont une même position spatiale dans l'image, et il en est de même pour les deux signaux à l'entrée et en sortie de la mémoire 20. Les deux signaux à l'entrée de la mémoire 10 et en sortie de la mémoire 20 sont donc décalés de deux images exactement. Le circuit de filtrage est un circuit d'interpolation spatiale 30 qui calcule en chaque point, pour le point à générer, la valeur correspondante du signal par pondération des signaux associés aux points voisins du point à générer dans l'image. Un exemple de circuit d'interpolation ou interpolateur de lignes, est par exemple décrit dans la demande de brevet européen EP-A-0163513.

Le convertisseur selon l'invention comprend également, en association avec le circuit de filtrage spatial, un circuit de sélection de signal composé des deux mémoires 10 et 20, de deux circuits à retard 40 et 50, et d'un circuit de tri 60. Ce circuit de tri 60 reçoit sur ses entrées A, B, C trois signaux séparés de la durée d'une image :
- le signal sur l'entrée B est le signal d'interpolation délivré pour la trame courante par le circuit d'interpolation spatiale 30 ;
- le signal sur l'entrée A et celui sur l'entrée C sont les deux signaux correspondant spatialement au même point que celui sur l'entrée B mais appartenant respectivement à l'image qui précède et à l'image qui suit l'image courante.

Les circuits à retard 40 et 50 sont prévus pour compenser le retard introduit par l'opération d'interpolation du circuit 30 et garantir le réalignement temporel des signaux se présentant sur les entrées A, B, C. Le circuit de tri 60 choisit alors, pour chaque point, celle des trois valeurs qui occupe la position intermédiaire et valide le signal correspondant.

Le convertisseur selon l'invention comprend enfin un circuit de reconstitution d'image finale. Ce circuit est composé d'une part d'un troisième circuit à retard 70 et d'autre part d'un circuit de multiplexage 80. Le circuit à retard 70 joue, comme les circuits 40 et 50, un rôle de réalignement temporel des signaux se présentant sur les entrées du circuit de multiplexage 80. Ce circuit de multiplexage permet d'entrelacer les échantillons courants sortant du circuit à retard 70 et les échantillons reconstruits disponibles en sortie du circuit de tri 60, et ce en fonction de la position relative des deux réseaux d'échantillonnage des images de départ.

**Revendications**

1. Procédé de traitement de signaux vidéo échantillonnés selon un réseau d'échantillonnage différent d'une image à l'autre comprenant, entre autres opérations, une opération de sélection de signaux vidéo aiguillés, caractérisé en ce qu'il comprend les opérations suivantes :

(a) filtrage spatial par calcul, en chaque point à générer d'une image courante, d'une valeur résultant de la pondération des valeurs attachées aux points voisins dudit point dans la même ligne de cette image courante et aux points également voisins dudit point mais appartenant à au moins deux lignes voisines de ladite ligne courante de l'image courante ;

(b) ladite sélection, par tri et choix de la valeur intermédiaire parmi celles ainsi triées, le tri opéré étant effectué parmi plusieurs valeurs dont l'une est celle obtenue à la suite de l'opération de filtrage spatial et dont les autres sont celles attachées à des points de même position que ledit point de la ligne courante mais appartenant au moins à l'image qui précède et à l'image qui suit ladite image courante ;

(c) reconstitution d'image par génération d'un signal vidéo échantillonné selon un réseau d'échantillonnage identique pour toutes les images, les points courants de ladite image comprenant alternativement le point correspondant de l'image initiale quand ce point correspondant existe et un point reconstruit selon les opérations précédentes de filtrage et de sélection quand ce point correspondant n'est pas présent.

2. Convertisseur de signaux vidéo pour la mise en oeuvre du procédé selon la revendication 1, caractérisé en ce qu'il comprend :

(a) un circuit de filtrage spatial ;

(b) un circuit de sélection de signaux vidéo ;

(c) un circuit de reconstitution d'image finale à réseau d'échantillonnage stable.

3. Convertisseur selon la revendication 2, caractérisé en ce que :

(a) le circuit de filtrage spatial comprend un circuit d'interpolation par pondération des signaux associés au point courant d'une ligne de l'image courante, aux points voisins dudit point dans la même ligne de cette image courante et aux points également voisins dudit point mais appartenant à au moins deux lignes voisines de ladite ligne courante de l'image courante ;

(b) le circuit de sélection comprend une première mémoire retardant le signal d'entrée de la durée d'une image, une deuxième mémoire retardant la sortie de la première mémoire de la durée d'une image, deux premier et deuxième circuits à retard dont l'entrée est reliée pour le premier de ces circuits à l'entrée de la première mémoire et pour le deuxième à la sortie de la deuxième mémoire, et un circuit de tri recevant sur ses trois entrées respectivement le signal de sortie du deuxième circuit à retard, le signal de sortie du circuit d'interpolation, et le signal de sortie du premier circuit à retard ;

(c) le circuit de reconstitution d'image finale comprend un troisième circuit à retard et un circuit de multiplexage.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 169 527 (HITACHI) <br> * Page 3, lignes 5-13; page 8, ligne 4 - page 11, ligne 19; figures 4,6-8 * <br> --- | 1 | H 04 N 5/44 |
| A | WO-A-8 502 080 (I.B.A.) <br> * Page 4, lignes 31-33; page 5, ligne 31 - page 6, ligne 13; figures 1,4-6 * <br> ----- | 1 | |

DOMAINES TECHNIQUES RECHERCHES (Int. Cl.4)

H 04 N

Le présent rapport a été établi pour toutes les revendications

| Lieu de la recherche | Date d'achèvement de la recherche | Examinateur |
|---|---|---|
| LA HAYE | 28-07-1988 | YVONNET J.W. |